# EUROPEAN PATENT SPECIFICATION

(11) **EP 3 026 017 B1**
(45) Date of publication and mention of the grant of the patent: **05.09.2018**
(21) Application number: 15781282.7
(22) Date of filing: 05.06.2015
(51) Int. Cl.: C01G 25/02

(54) **SOL COMPRISING AMORPHOUS ZR-O-BASED PARTICLES AS DISPERSOID AND METHOD FOR PRODUCING SAME**
SOL MIT AMORPHEN ZR-0-BASIERTEN PARTIKELN ALS DISPERSOID UND HERSTELLUNGSVERFAHREN FÜR SOL
SOL COMPRENANT DES PARTICULES À BASE DE ZRO AMORPHES EN TANT QUE DISPERSOÏDE ET SON PROCÉDÉ DE PRODUCTION

(30) Priority: 29.09.2014 JP 2014199259
(43) Date of publication of application: 01.06.2016
(73) Proprietor: Daiichi Kigenso Kagaku Kogyo Co., Ltd., Osaka-shi, Osaka 559-0025 (JP)
(72) Inventor: TAKASAKI, Fumiyuki, Osaka-shi Osaka 559-0025 (JP)
(74) Representative: Nieuwenhuys, William Francis
(86) International application number: PCT/JP2015/066410
(87) International publication number: WO 2016/051870

(56) References cited:
- WO-A1-2004/078652
- WO-A1-2004/078884
- WO-A1-2012/014893
- JP-A- 2006 503 790
- JP-A- 2006 511 435
- JP-A- 2010 523 451
- HAIJIAN HUANG ET AL: "Anti-ultraviolet finishing of PET fabrics with nano-ZrO2 sol", JOURNAL OF TEXTILE RESEARCH, vol. 33, no. 1, 1 January 2012 (2012-01-01), pages 87-91, XP055314993,
- HUANG YUE-XIANG ET AL: "Synthesis of nanosized zirconia particles via urea hydrolysis", POWDER TECHNOLOGY, vol. 72, no. 2, 1 October 1992 (1992-10-01), pages 101-104, XP055314989, CH ISSN: 0032-5910, DOI: 10.1016/0032-5910(92)88015-A

## Description

### Technical Field

The present invention relates to a sol comprising amorphous Zr-O-based particles as a dispersoid, and a production method of the sol.

### Background Art

Sols containing, as a dispersoid, compound particles containing zirconium and oxygen (including the concept of zirconium oxide sols) (the compound particles may hereinafter also be referred to as "Zr-O-based particles") are widely used as optical materials, catalysts, or binders because of their superiority in refraction index, light transmittance, specific surface area, surface activity, hardness, and chemical resistance. Among these sols, sols containing amorphous Zr-O-based particles as a dispersoid have particularly high surface activity, and thus the use thereof as binders for a photocatalyst is increasing in recent years, as disclosed in Patent Documents 1 and 2. Hereunder, zirconium oxide may also be referred to as "zirconia."

Generally, particle diameter is the most important property of a sol, greatly affecting the rheology of the sol itself and the mixture system incorporating the sol, as well as the application product characteristics. When the particles are spherical, their specific surface area is inversely proportional to the square of the particle diameter; thus, it is possible to control phenomena caused by surface interaction in the sol and the mixture system incorporating the sol, such as an increase in thickness, by changing the particle diameter. On the other hand, since superior application characteristics of the application products produced from a mixture system made by mixing a sol and other materials are often ensured by uniform and more micro-level mixing of the sol and other materials, the particle diameter tends to be further decreased. However, originally, the optimal particle diameter should be determined based on the balance of application characteristics and rheology control. To this end, it is more preferable to increase the controllable range of the particle diameter.

Since zirconia sols having a wide range of particle diameters have hitherto been disclosed, various particle diameters of zirconia sols can be selected. For example, Patent Document 3 discloses a method of dispersing in water a zirconium hydroxide obtained by adding a zirconium oxychloride aqueous solution to a sodium hydroxide aqueous solution heated to 90°C, adding nitric acid to the dispersion, keeping the dispersion at 100°C, and cooling the dispersion, followed by purification by ultrafiltration, thereby obtaining a zirconia sol having a mean particle diameter of 17 nm. Further, Patent Document 4 discloses a method of performing hydrolysis of an aqueous solution having a zirconia concentration of 0.2 mol/L, which is prepared by adding 30 g of ammonium chloride to 100 mL of 2 mol/L zirconium oxychloride and adding distilled water, by boiling the aqueous solution for 100 hours, thereby obtaining a zirconia sol having a mean particle diameter of 0.24 µm (i.e., 240 nm).

Patent Document 5 discloses a sol containing, as a dispersoid, amorphous Zr-O-based particles having a mean particle diameter of 1 to 20 nm. However, no methods have been discovered for controlling the particle diameter of a sol containing amorphous Zr-O-based particles as a dispersoid within the range of 20 to 200 nm.

The article of HAIJIAN HUANG ET AL: "Anti-ultraviolet finishing of PET fabrics with nano-ZrO2 sol", JOURNAL OF TEXTILE RESEARCH, vol. 33, no. 1, 1 January 2012, pages 87-91, discloses the preparation of a sol of amorphous ZrO₂ nanoparticles by one-step hydrolysis.

### Patent Documents

Patent Document 1: JP2009-270040A
Patent Document 2: JP2012-014893A1
Patent Document 3: Japanese Patent No. 5019826B
Patent Document 4: Japanese Patent No. 2882040B
Patent Document 5: Japanese Patent No. 4963820B

### Summary of Invention

### Technical Problem

The present invention was made in view of the above-described problems, and an object thereof is to provide a sol comprising, as a dispersoid, amorphous Zr-O-based particles having a median diameter (particle diameter D₅₀) of 50 to 200 nm, so as to enable optimal control of the rheology and application characteristics of a mixture system incorporating the sol.

### Solution to Problem

The present inventors carried out extensive research, and found that the median diameter (particle diameter D₅₀) of a sol comprising amorphous Zr-O-based particles as a dispersoid can be controlled within a range of 50 to 200 nm by performing hydrolysis of a specific zirconium salt aqueous solution having a molar ratio Cl/Zr of 1.0 to 3.0 in at least two steps under specific conditions. With this finding, the present inventors completed the present invention.

More specifically, the present invention relates to the following sols comprising amorphous Zr-O-based particles as a dispersoid, according to claim 1, and the production method thereof, according to claim 3.
1. A sol comprising, as a dispersoid, amorphous compound particles containing zirconium and oxygen, the amorphous compound particles having a median diameter in a range of 50 to 200 nm.
2. The sol according to Item 1, wherein when powder obtained by drying the sol at 45 to 55°C to a constant weight is subjected to thermogravimetry in which the temperature is increased from 50°C to 1000°C, the weight change rate (weight reduction rate) is 20% or more.
3. The sol according to Item 1, wherein when powder obtained by drying the sol at 45 to 55°C to a constant weight is subjected to thermogravimetry in which the temperature is increased from 50°C to 1000°C, the weight change rate (weight reduction rate) is 25% or more.
4. A method for producing the sol according to any one of Items 1 to 3, the method comprising the steps of:
   (1) Step 1 of hydrolyzing a zirconium salt aqueous solution having a molar ratio (Cl/Zr) of a chlorine element to a zirconium element in a range of 1.0 to 3.0, a pH of 5 or less, and a zirconium element concentration in a range of 6 to 15 wt% on a zirconium oxide basis (however, the above molar ratio Cl/Zr does not include Cl that can be regarded as a chloride salt other than zirconium chloride salt), thereby obtaining a hydrolyzed solution; and
   (2) Step 2 of further hydrolyzing a diluted solution obtained by diluting the hydrolyzed solution obtained in Step 1 with water, wherein the dilution is performed so that the weight of the solution after the dilution is 2 to 15 times the weight of the solution before the dilution.

### Advantageous Effects of Invention

Since the present invention makes it possible to provide a sol containing, as a dispersoid, amorphous Zr-O-based particles having a greater range of particle diameters than that of known products, the sol of the present invention enables optimal control of the rheology and application characteristics of a mixture system incorporating the sol in various application fields thereof, such as binder, catalyst, etc. The sol of the present invention is thus usable in these fields.

### Brief Description of Drawings

Fig. 1 shows an X-ray diffraction profile of sols containing Zr-O-based particles as a dispersoid produced in Example 1 and Comparative Example 1.
Fig. 2 shows a TG-DTA chart of a sol containing Zr-O-based particles as a dispersoid produced in Example 1.
Fig. 3 shows a TG-DTA chart of a sol containing Zr-O-based particles as a dispersoid produced in Comparative Example 1.

### Description of Embodiments

The sol containing amorphous Zr-O-based particles as a dispersoid of the present invention and a production method thereof are described below in detail.

In this specification, the median diameter (particle diameter D₅₀) means a particle diameter to ensure a volume-based cumulative frequency of 50% in particle diameter measurement of the sol by a photon correlation method. Further, hereunder, "%" used as a unit of concentration consistently means "wt%."

### Sol containing amorphous Zr-O-based particles as a dispersoid

The sol of the present invention is characterized in that the sol contains, as a dispersoid, amorphous compound particles containing zirconium and oxygen (amorphous Zr-O-based particles), and that the sol has a median diameter in a range of 50 to 200 nm.

The "Zr-O-based particle" of the present invention means particles containing, as componential elements, Zr and O. Examples of Zr-O-based particles include zirconium hydroxide (Zr(OH)₄), zirconyl hydroxide (ZrO(OH)₂), hydrated zirconium oxide (ZrO₂ · xH₂O), zirconium oxide (ZrO₂), and mixtures thereof.

Among them, particles that contain Zr and O as componential elements and that contain amorphia as a main component include at least one selected from zirconium hydroxide (Zr(OH)₄), zirconyl hydroxide (ZrO(OH)₂) and mixtures thereof. Although the sol of the present invention contains amorphous Zr-O-based particles as a main component, it may also contain a certain amount or less of crystalline Zr-O-based particles. The "main component" means a content of at least 50%.

X-ray diffraction, thermogravimetry (TG) and differential thermal analysis (DTA) may be used to confirm that the amorphous Zr-O-based particles, which are a dispersoid of the sol of the present invention, mainly contain amorphous particles and contain a certain amount or less of crystalline Zr-O-based particles. Further, if the particles satisfy conditions (a) and/or (b) below, the particles are confirmed to suitably satisfy the required conditions of the sol of the present invention.
(a) A peak attributable to a specific crystal phase is not observed in an X-ray diffraction profile (2θ/θ measurement) of powder obtained by drying the dispersoid separated from the sol at 45 to 55°C to a constant weight.
(b) an exothermic peak associated with a phase transition from an amorphous phase to a crystal phase is observed in a temperature range of 350 to 450°C in the DTA of powder obtained by drying the dispersoid separated from the sol at 45 to 55°C to a constant weight, and the weight change rate (weight reduction rate: absolute value (the same hereinafter)) in the process of temperature increase from 50°C to 1000°C in TG is 20% or more. The weight reduction rate is preferably 25% or more, and particularly preferably 25 to 35%.

For reference, crystalline Zr-O-based particles, such as hydrated zirconium oxide (ZrO₂ · xH₂O) or zirconium oxide (ZrO₂), have a peak attributable to a specific crystal phase in an X-ray diffraction profile (2θ/θ measurement), and do not have an exothermic peak in a temperature range of 350 to 450°C in DTA.

The value of the weight change rate (weight reduction rate) in TG described in (b) above is greatly affected by the dehydration reaction of the OH group of the amorphia represented by chemical formulas (Zr(OH)₄) and (ZrO(OH)₂). Thus, the weight change rate (weight reduction rate) reflects the content of amorphia.

The dispersoid contained in the sol of the present invention has a median diameter of 50 to 200 nm. The median diameter is preferably in a range of 50 to 150 nm. When the median diameter becomes less than 50 nm, the particle diameter is excessively small and the surface interaction between amorphous Zr-O-based particles increases. This may increase the viscosity. Further, a median diameter of more than 200 nm is not preferable because the rapidity of diffusion of the particles may decrease, thereby causing sedimentation of the particles.

The pH of the sol of the present invention is not particularly limited, and may be set to an appropriate value according to the desired use of the sol. The components of the sol of the present invention other than the amorphous Zr-O-based particles are not particularly limited, and may be any known components of a metal oxide sol, including mineral acids such as hydrochloric acid or nitric acid; carboxylic acids, such as acetic acid, tartaric acid, or citric acid; carbonic acid, and ammonia. Further, the sol may also contain a metal or metals other than Zr, insofar as the application characteristics of the mixture system incorporating the sol are not impaired.

The concentration of the zirconium element in the sol of the present invention is not particularly limited; however, the concentration of the zirconium element is preferably 5 to 30%, more preferably 7 to 25%, and most preferably 10 to 20%, on a ZrO₂ basis. The present invention can provide a sol having a high concentration although the sol contains an amorphous dispersoid, since the particle diameter of the dispersoid is relatively large and thus the viscosity of the sol does not easily increase.

The dispersion medium of the sol of the present invention is not particularly limited insofar as the stability of the sol can be maintained. Examples of the dispersion media include water, methanol, ethanol, and acetone. Generally, water is preferably used.

### Method for producing a sol containing amorphous Zr-O-based particles as a dispersoid

The method for producing a sol of the present invention is a method for producing the above sol of the present invention. The method comprises the steps of:
(1) Step 1 of hydrolyzing a zirconium salt aqueous solution having a molar ratio (Cl/Zr) of a chlorine element to a zirconium element in a range of 1.0 to 3.0, a pH of 5 or less, and a zirconium element concentration in a range of 6 to 15 wt% on a zirconium oxide basis (however, the above molar ratio Cl/Zr does not include Cl that can be regarded as a chloride salt other than zirconium chloride salt), thereby obtaining a hydrolyzed solution; and
(2) Step 2 of further hydrolyzing a diluted solution obtained by diluting the hydrolyzed solution obtained in Step 1 with water, wherein the dilution is performed so that the weight of the solution after the dilution is 2 to 15 times the weight of the solution before the dilution.

More specifically, the method for producing the sol of the present invention is a method of hydrolyzing a predetermined zirconium salt aqueous solution in at least two steps, i.e., in Steps 1 and 2.

The zirconium salt aqueous solution used in Step 1 as a raw material has a molar ratio (Cl/Zr) in a range of 1.0 to 3.0, preferably in a range of 1.5 to 2.5. However, the above molar ratio Cl/Zr does not include Cl that can be regarded as a chloride salt other than zirconium chloride salt. Examples of chloride salt other than zirconium chloride salt include sodium chloride (NaCl), potassium chloride (KCl), calcium chloride (CaCl), magnesium chloride (CaCl₂), aluminum chloride (AlCl₃), ammonium chloride (NH₄Cl), amine chlorides and like chlorides.

For example, in the present invention, in the concentrations of the components of the zirconium salt aqueous solution subjected to hydrolysis in Step 1, when the concentration of all Cl is 0.30 M (mol/L), the concentration of all Zr is 0.10 M, and the concentration of all Na is 0.10 M, the molar ratio Cl/Zr is regarded as 2.0. More specifically, when a sodium hydroxide having a molar ratio (Na/Zr) of 0.5 is added to a zirconium chloride salt aqueous solution having a molar ratio (Cl/Zr) of 2.0, the molar ratio (Cl/Zr) of the zirconium chloride salt aqueous solution is regarded as 1.5. Further, when a sodium chloride having a molar ratio (Na/Zr) of 0.5 is added to a zirconium chloride salt aqueous solution having a molar ratio (Cl/Zr) of 1.5, the molar ratio (Cl/Zr) of the zirconium chloride salt aqueous solution is regarded as still 1.5, i.e., the molar ratio does not change.

The zirconium salt aqueous solution used as a raw material may contain other components insofar as it satisfies the later-described predetermined zirconium element concentration and the above-described molar ratio; however, the zirconium salt aqueous solution must have a pH of 5 or less (preferably less than 5), preferably 4 or less, and more preferably 3 or less. This is because the production method of the present invention is based on the hydrolysis mechanism of the acidic zirconium salt aqueous solution. It is not preferable that the zirconium salt aqueous solution subjected to hydrolysis has a pH of more than 5, because the required chemical reaction may not be advanced.

Further, the zirconium salt aqueous solution is preferably a zirconium chloride aqueous solution. Examples of zirconium salt aqueous solutions satisfying the above conditions include a solution prepared by dissolving zirconium oxychloride octahydrate (special grade reagent, molar ratio Cl/Zr = 2.0, Kishida Chemical Co., Ltd.) in purified water.

General devices and facilities for use in hydrolysis treatment may be used in the hydrolysis of the present invention. The device and the facility may be selected according to the manufacturing scale. In principle, the effects of the production method of the present invention are ensured when hydrolysis is performed in three or more steps; however, hydrolysis in two steps is more efficient.

In the process of hydrolyzing a zirconium salt, it is generally assumed that the polymerization chemical species contained in the zirconium salt aqueous solution before the hydrolysis grow in a polymerization manner along with the progress of the hydrolysis, thereby forming amorphous Zr-O-based particles (reaction A). Thereafter, the obtained amorphous Zr-O-based particles are further heated, thereby finally causing phase transition into a zirconium oxide (reaction B).

Generally, it is difficult to obtain a sol satisfying the requirements of the present invention by generally known zirconia sol production methods, such as the 1-step hydrolysis of zirconium oxychloride (ZrOCl₂), acid peptization of zirconium hydroxide, or the like. This is because since these reactions easily cause phase transition into a zirconium oxide (reaction B), it is difficult to independently advance only the formation of amorphous Zr-O-based particles having a median diameter of 50 to 200 nm (reaction A).

In contrast, the production method of the present invention makes it possible to advance only reaction A and suppress reaction B by performing the hydrolysis in two steps. This is presumably because, by partially advancing only reaction A in the first step (Step 1) by controlling the hydrolysis conditions, it becomes possible to form an idiosyncratic precursor having a stable structure that does not easily cause phase transition (reaction B).

The concentration of the zirconium element in the first step (Step 1) of the hydrolysis reaction may be adjusted according to the molar ratio Cl/Zr of the zirconium salt aqueous solution subjected to the hydrolysis. However, in terms of efficiency and low cost, the concentration is 6 to 15%, preferably 7 to 14%, and more preferably 8 to 13% on a ZrO₂ basis. When this concentration is less than 6%, the reaction B may be easily advanced. Further, a concentration of more than 15% is not preferable because the desired idiosyncratic precursor that does not easily cause phase transition (reaction B) cannot be sufficiently formed.

The holding time and holding temperature in Step 1 of the hydrolysis reaction are not limited insofar as the object of the present invention can be accomplished; however, in terms of efficiency and low cost, the temperature is generally in a range of 90 to 160°C, and preferably in a range of 100 to 120°C. Further, the holding time is preferably adjusted according to the holding temperature. For example, it is preferable that when the holding temperature is 100°C, the holding time is 10 to 200 hours; when the holding temperature is 120°C, the holding time is 5 to 40 hours; and when the holding temperature is 150°C, the holding time is 1 to 10 hours.

If the holding temperature is lower than the above range or if the holding time is shorter than the above range, reaction A may not be fully advanced. However, a high holding temperature or a long holding time is not preferable because reaction B may be advanced. Due to its properties, the precursor generated in Step 1 does not easily cause phase transition into a zirconium oxide.

In the second step (Step 2), the hydrolyzed solution obtained in Step 1 is diluted with water, and then is subjected to hydrolysis again. The dilution is performed so that the weight of the solution after the dilution becomes 2 to 15 times, preferably 2 to 10 times, and more preferably 3 to 8 times the weight of the solution before the dilution.

The holding temperature and the holding time in the hydrolysis reaction in Step 2 are not particularly limited insofar as the object of the present invention can be accomplished. However, the temperature is generally in a range of 90 to 160°C, and preferably 100 to 120°C. Further, the holding time is preferably adjusted according to the holding temperature. For example, it is preferable that when the holding temperature is 100°C, the holding time is 10 to 200 hours; when the holding temperature is 120°C, the holding time is 5 to 40 hours; and when the holding temperature is 150°C, the holding time is 1 to 10 hours.

If the holding temperature is lower than the above range or if the holding time is shorter than the above range, reaction A may not be fully advanced. However, a high holding temperature or a long holding time is not preferable because reaction B may be advanced.

When a third or later hydrolysis step is arbitrarily performed, it is preferable that, as in Step 2, the hydrolyzed solution obtained in the previous step is diluted with water, and is then subjected to hydrolysis again. In this case, as in Step 2, the dilution is performed so that the weight of the solution after the dilution becomes 2 to 15 times, preferably 2 to 10 times, and more preferably 3 to 8 times the weight of the solution before the dilution.

The sol of the present invention obtained through the above steps may be concentrated by ultrafiltration after the sol is cooled to normal temperature. Further, at this time, the sol may be washed with ion-exchanged water so as to remove the impurities. After the ultrafiltration, the pH may be changed by using an acid or alkaline solution.

### Examples

The present invention is more specifically explained below in reference to Examples and Comparative Examples. However, the present invention is not limited to those examples.

The sol obtained in each Example and each Comparative Example contains hafnium oxide as an inevitable impurity in an amount of 1.3 to 2.5 wt% based on the amount of zirconium oxide.

In the Examples and Comparative Examples, the conditions below are used in the analyses.
▪ TG-DTA
   Model: Thermo Plus TG8120 (RIGAKU)
   Temperature range: room temperature to 1000°C
   Temperature increase rate: 10°C/minute
   Sample amount: 19 to 21 mg
   Sample pan: Pt
   Reference sample: Al₂O₃ (20 mg)
   Atmosphere: air (aeration at 100 mL per minute)
▪ XRD
   Model: RINT2000 (RIGAKU)
▪ Particle Diameter Measurement
   Model: Zetasizer NanoZS (Malvern)
   Measurement concentration: 0.05% on a ZrO₂ basis
   Measurement temperature: 25°C
   Scattering angle: 173°

### Example 1

An aqueous solution having a concentration of 10% on a ZrO₂ basis and a pH of 0.3 prepared by dissolving zirconium oxychloride octahydrate (special grade reagent, molar ratio Cl/Zr = 2.0, Kishida Chemical Co., Ltd.) in purified water was held at 120°C for 10 hours in an autoclave, thereby performing the first step of hydrolysis.

The aqueous solution obtained in the first step of hydrolysis was 10-fold diluted (the concentration on a ZrO₂ basis was 1%) with purified water, and further held at 120°C for 10 hours, thereby performing the second step of hydrolysis reaction to obtain a sol containing Zr-O-based particles as a dispersoid.

Next, the sol was purified and concentrated by ultrafiltration, thereby obtaining a sol containing Zr-O-based particles as a dispersoid, with a concentration of 15% on a ZrO₂ basis and a pH of 3.1. The particle diameter D₅₀ of the sol was 160 nm.

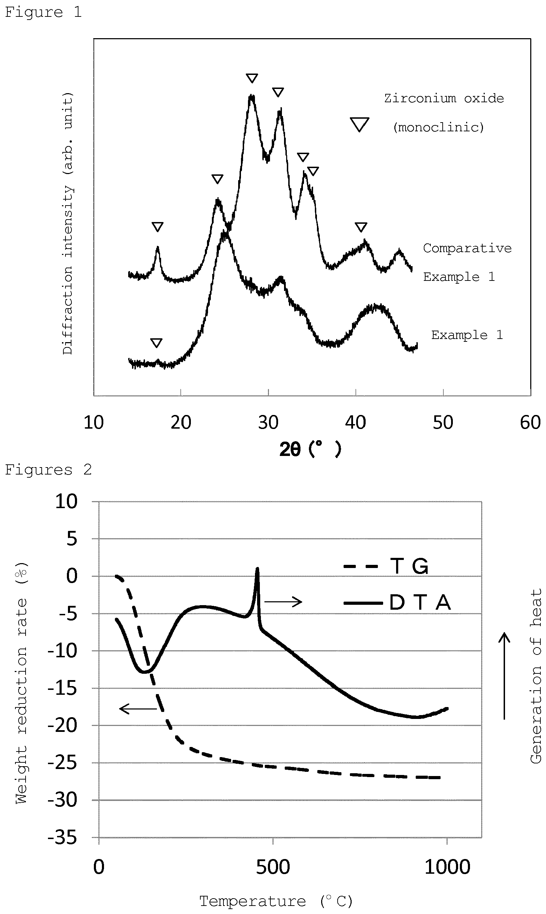

Fig. 1 shows an X-ray diffraction profile (2θ/θ measurement) of Zr-O-based particles separated by adding ammonia water to the sol. Fig. 1 shows that the sol mainly contains amorphia.

Fig. 2 shows a TG-DTA chart of the Zr-O-based particles dried at 50°C to a constant weight. Fig. 2 shows that the weight change rate (weight reduction rate) during the temperature increase from 50°C to 1000°C was about 27%, and that an exothermic peak attributable to phase transition was observed around 450°C.

### Example 2

The same method as in Example 1 was performed, except that the aqueous solution after the first step of hydrolysis was 3.3-fold diluted (the concentration on a ZrO₂ basis was 3%) with purified water, thereby obtaining a sol containing Zr-O-based particles as a dispersoid, with a concentration of 15% on a ZrO₂ basis and a pH of 3.2. The particle diameter D₅₀ of the sol was 104 nm.

An X-ray diffraction profile (2θ/θ measurement) of Zr-O-based particles separated by adding ammonia water to the sol shows that the sol mainly contains amorphia. Further, the TG-DTA of the Zr-O-based particles dried at 50°C to a constant weight shows that the weight change rate (weight reduction rate) during the temperature increase from 50°C to 1000°C was about 27%, and that an exothermic peak attributable to phase transition was observed around 450°C.

### Example 3

The same method as in Example 1 was performed, except that the aqueous solution after the first step of hydrolysis was 2-fold diluted (the concentration on a ZrO₂ basis was 5%) with purified water, thereby obtaining a sol containing Zr-O-based particles as a dispersoid, with a concentration of 15% on a ZrO₂ basis and a pH of 3.1. The particle diameter D₅₀ of the sol was 59 nm.

An X-ray diffraction profile (2θ/θ measurement) of Zr-O-based particles separated by adding ammonia water to the sol shows that the sol mainly contains amorphia. Further, the TG-DTA of the Zr-O-based particles dried at 50°C to a constant weight shows that the weight change rate (weight reduction rate) during the temperature increase from 50°C to 1000°C was about 28%, and that an exothermic peak attributable to phase transition was observed around 440°C.

### Comparative Example 1

An aqueous solution having a concentration of 1% on a ZrO₂ basis and a pH of 1.1 prepared by dissolving a zirconium oxychloride octahydrate (special grade reagent, molar ratio Cl/Zr = 2.0, Kishida Chemical Co., Ltd.) in purified water was held at 120°C for 10 hours in an autoclave, thereby obtaining a sol containing Zr-O-based particles as a dispersoid.

Subsequently, the sol was purified and concentrated by ultrafiltration, thereby obtaining a sol containing Zr-O-based particles as a dispersoid, with a concentration of 15% on a ZrO₂ basis and a pH of 3.1. The particle diameter D₅₀ of the sol was 79 nm.

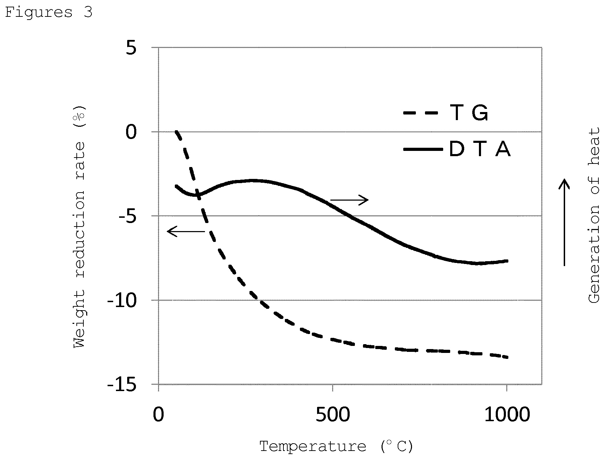

Fig. 1 shows an X-ray diffraction profile (2θ/θ measurement) of Zr-O-based particles separated by adding ammonia water to the sol. Fig. 1 shows that the sol mainly contains zirconium oxide in a crystal phase. Further, Fig. 3 shows a TG-DTA chart of the Zr-O-based particles dried at 50°C to a constant weight. Fig.3 shows that the weight change rate (weight reduction rate) during the temperature increase from 50°C to 1000°C was about 13%, and that an exothermic peak was not observed.

### Comparative Example 2

The same method as in Comparative Example 1 was performed, except that the aqueous solution prepared by dissolving a zirconium oxychloride in purified water had a concentration of 5% on a ZrO₂ basis and a pH of 0.4, thereby obtaining a sol containing Zr-O-based particles as a dispersoid, with a concentration of 15% on a ZrO₂ basis and a pH of 3.1. The particle diameter D₅₀ of the sol was 78 nm.

An X-ray diffraction profile (2θ/θ measurement) of Zr-O-based particles separated by adding ammonia water to the sol shows that the sol mainly contains zirconium oxide in a crystal phase. Further, a TG-DTA chart of the Zr-O-based particles dried at 50°C to a constant weight shows that the weight change rate (weight reduction rate) during the temperature increase from 50°C to 1000°C was about 17%, and that an exothermic peak was not observed.

## Claims

1. A sol comprising, as a dispersoid, amorphous compound particles containing zirconium and oxygen, the amorphous compound particles having a median diameter in a range of 50 to 200 nm to ensure a volume-based cumulative frequency of 50% in particle diameter measurement of the sol by a photon correlation method and the amorphous compound particles comprise at least one selected from the group consisting of zirconium hydroxide, zirconyl hydroxide and mixtures thereof,
wherein when powder obtained by drying the sol at 45 to 55°C to a constant weight is subjected to thermogravimetry in which the temperature is increased from 50°C to 1000°C, the weight change rate is 20% or more.

2. The sol according to claim 1, wherein when powder obtained by drying the sol at 45 to 55°C to a constant weight is subjected to thermogravimetry in which the temperature is increased from 50°C to 1000°C, the weight change rate is 25% or more.

3. A method for producing the sol according to claim 1 or 2, the method comprising the steps of:
(1) Step 1 of hydrolyzing a zirconium salt aqueous solution having a molar ratio (Cl/Zr) of a chlorine element to a zirconium element in a range of 1.0 to 3.0, a pH of 5 or less, and a zirconium element concentration in a range of 6 to 15 wt% on a zirconium oxide basis and the above molar ratio Cl/Zr does not include Cl that can be regarded as a chloride salt other than zirconium chloride salt, thereby obtaining a hydrolyzed solution; and
(2) Step 2 of further hydrolyzing a diluted solution obtained by diluting the hydrolyzed solution obtained in Step 1 with water, wherein the dilution is performed so that the weight of a solution after the dilution is 2 to 15 times the weight of a solution before the dilution.

## Patentansprüche

1. Sol umfassend, als Dispersoid, amorphe Verbindungsteilchen enthaltend Zirkonium und Sauerstoff, wobei die amorphen Verbindungsteilchen einen mittleren Durchmesser in einem Bereich von 50 bis 200 nm aufweisen, um einer kumulative Häufigkeit, auf Volumenbasis, von 50 % im Teilchendurchmessermesswert des Sols durch ein Photonenkorrelationsverfahren sicherzustellen, und die amorphen Verbindungsteilchen mindestens eines umfassen ausgewählt aus der Gruppe bestehend aus Zirkoniumhydroxid, Zirkonylhydroxid und Mischungen davon,
wobei, wenn Pulver, das durch Trocknen des Sols bei 45 bis 55 °C auf ein konstantes Gewicht erhalten wird, einer Thermogravimetrie unterworfen wird, wobei die Temperatur von 50 °C auf 1000 °C erhöht wird, die Gewichtsänderungsrate 20 % oder mehr beträgt.

2. Sol nach Anspruch 1, wobei das Pulver, das durch Trocknen des Sols bei 45 bis 55 °C bis auf ein konstantes Gewicht erhalten wird, einer Thermogravimetrie unterworfen wird, wobei die Temperatur von 50 °C auf 1000 °C erhöht wird, die Gewichtsänderungsrate 25 % oder mehr beträgt.

3. Verfahren für die Herstellung des Sols nach Anspruch 1 oder 2, wobei das Verfahren die Schritte umfasst des:
(1) Schritts 1 des Hydrolysierens einer wässrigen Zirkoniumsalzlösung, die ein Molverhältnis (Cl/Zr) eines Chlorelements zu einem Zirkoniumelement in einem Bereich von 1,0 bis 3,0, einen pH-Wert von 5 oder weniger und eine Zirkoniumelementkonzentration in einem Bereich von 6 bis 15 Gew.-%, auf einer Zirkoniumoxidbasis, aufweist und das obige Molverhältnis von Cl/Zr kein Cl einschließt, das als ein anderes Chloridsalz als das Zirkoniumchloridesalz betrachtet werden kann, wodurch eine hydrolysierte Lösung erhalten wird; und
(2) Schritts 2 weiteres Hydrolysierens einer verdünnten Lösung, die durch Verdünnen der in Schritt 1 erhaltenen hydrolysierten Lösung mit Wasser erhalten wird, wobei das Verdünnen so ausgeführt wird, dass das Gewicht einer Lösung nach dem Verdünnen das 2- bis 15-fache des Gewichts einer Lösung vor der Verdünnung ist.

## Revendications

1. Sol comprenant, comme dispersoïde, des particules de composé amorphe contenant du zirconium et de l'oxygène, les particules de composé amorphe ayant un diamètre médian situé dans une plage de 50 à 200 nm pour garantir une fréquence cumulée basée sur le volume de 50 % dans la mesure du diamètre des particules du sol selon un procédé de corrélation des photons et les particules de composé amorphe comprenant au moins l'un sélectionné dans le groupe constitué de l'hydroxyde de zirconium, de l'hydroxyde de zirconyle et de leurs mélanges,
lorsque la poudre obtenue par séchage du sol à 45 à 55°C à un poids constant est soumise à la thermogravimétrie dans laquelle la température est élevée de 50°C à 1000°C, le taux de changement de poids est de 20 % ou plus.

2. Sol selon la revendication 1, lorsque la poudre obtenue par séchage du sol à 45 à 55°C à un poids constant est soumise à la thermogravimétrie dans laquelle la température est élevée de 50°C à 1000°C, le taux de changement de poids est de 25 % ou plus.

3. Procédé de production du sol selon la revendication 1 ou 2, le procédé comprenant les étapes de:
(1) étape 1 d'hydrolyse de la solution aqueuse de sel de zirconium ayant un rapport molaire (Cl/Zr) d'un élément chlore à un élément zirconium dans une plage de 1,0 à 3,0, un pH de 5 ou moins, et une concentration en élément zirconium dans une plage de 6 à 15 % en pds sur une base d'oxyde de zirconium et le rapport molaire ci-dessus Cl/Zr n'inclut pas Cl qui peut être considéré comme un sel chlorure outre qu'un sel chlorure de zirconium obtenant ainsi une solution hydrolysée; et
(2) étape 2 d'hydrolyse supplémentaire d'une solution diluée obtenue par dilution de la solution hydrolysée obtenue dans l'étape 1 avec de l'eau, la dilution étant exécutée de sorte que le poids d'une solution après la dilution est de 2 à 15 fois le poids d'une solution avant la dilution.
